# EUROPÄISCHE PATENTSCHRIFT

(11) **EP 2 725 297 B1**
(45) Veröffentlichungstag und Bekanntmachung des Hinweises auf die Patenterteilung: **08.12.2021**
(21) Anmeldenummer: 13187548.6
(22) Anmeldetag: 07.10.2013
(51) Int. Cl.: F23N 5/24, F23K 5/00

(54) **Gasventil**
Gas valve
Vanne de gaz

(30) Priorität: 24.10.2012 AT 11422012
(43) Veröffentlichungstag der Anmeldung: 30.04.2014
(73) Patentinhaber: Vaillant GmbH, 42859 Remscheid (DE)
(72) Erfinder: Pecka, Kai, 42855 Remscheid (DE); Salg, Frank, 42897 Remscheid (DE); Sick, Jan-Hinrich, 38108 Braunschweig (DE); Krampe-Zadler, Christof, 44579 Castrop-Rauxel (DE)
(74) Vertreter: Popp, Carsten

(56) Entgegenhaltungen:
- DE-A1-102010 032 345
- DE-C1- 3 931 812
- GB-A- 2 476 073
- US-A- 2 898 046
- US-A- 4 460 007

## Beschreibung

Die Erfindung betrifft ein elektrisch ansteuerbares Gasventil, insbesondere für Brenngas. Gattungsgemäße elektrisch ansteuerbare Gasventile umfassen einen elektrisch ansteuerbaren Aktor, der in Abhängigkeit von einem elektrischen Signal die Gaszufuhr öffnet oder schließt. Um bei einem Ausfall der Stromversorgung sicherzustellen, dass sich das Gasventil in einem definierten Zustand befindet, wird in der Patentanmeldung GB 2 204 938 A ein Gasventil vorgeschlagen, welches durch einen elektrisch beheizbaren Aktor aus einer Formgedächtnislegierung angesteuert wird. Das Ventil ist im Ruhezustand geschlossen ist und wird bei Beaufschlagung mit Strom geöffnet, so dass das Gas fließen kann.

Das aus der GB 2 204 938 A bekannte Ventil hat den Vorteil, dass es bei Stromausfall einen definierten Zustand, nämlich geschlossen, einnimmt. Daher kann es aufgrund des Stromausfalls zu keinen gefährlichen Betriebszuständen kommen.

Die Tatsache, dass das Gasventil bei Erwärmung öffnet, hat jedoch den Nachteil, dass das Gasventil auch bei Fremderwärmung öffnet. Die ist beispielsweise bei einem Brand der Fall. Daher besteht im Brandfall das Risiko einer Gasexplosion, da das Gasventil öffnet.

Die Patentschrift GB 568,175 offenbart einen Gasbrenner zum Starten eines Koks-Brenners, wobei die Gasversorgung durch ein Ventil manuell gestartet wird und durch eine Vorrichtung wieder verschlossen wird, wenn der Koks-Brenner eine vorgegebene Temperatur erreicht hat, so dass der Gasbrenner zum Starten nicht mehr benötigt wird. Das Erreichen der vorgegebenen Temperatur wird durch zwei externe Thermoelemente sensiert. Dadurch kann zwar das Gasventil wieder verschlossen werden, aber das Risiko des unbeabsichtigten Öffnens des Ventils durch Fremderwärmung besteht weiterhin.

Die Patentanmeldung DE 1 270 2610 A1 beschreibt eine externe Schmelzsicherung, die bei einer Fehlfunktion des Geräts die Gaszufuhr stoppt, indem die Thermospannung unterbrochen wird. Auch hier würde das Ventil immer noch im Brandfall ungewollt öffnen.

Die Patentschrift US 2 898 046 A offenbart ein Sicherheits-Gasventil, welches bei Eintreten bestimmter vorwählbarer Temperaturbedingungen die Gaszufuhr thermostatisch unterbricht.

Die Patentschrift DE 39 31 812 C1 zeigt ein Abgasrückführventil, das zum Schutz der Ventilmembran bei einer bestimmte Temperatur schließt.

In der Patentanmeldung GB 2476073 A wird eine thermostatische Ventilanordnung für Kühlflüssigkeit offenbart, welches ein erstes thermisches Ausdehnungselement aufweist, das von der Kühlflüssigkeit erwärmt wird und einen ersten Ventilteller bei Überschreiten einer ersten Temperatur öffnet. Ein zweites thermisches Ausdehnungselement verschließt einen zweiten Ventilteller bei Überschreiten einer zweiten, höheren Temperatur. Damit ist die Ventileinheit nur innerhalb eines definierten Temperaturbereichs geöffnet.

Es ist daher Aufgabe der Erfindung, ein gattungsgemäßes Gasventil gemäß der der Patentanmeldung GB 2 204 938 A dahingehend zu weiterzuentwickeln, dass das Gasventil auch im Brandfall automatisch verschließt.

Diese Aufgabe wird gemäß den Merkmalen des Anspruchs 1 dadurch gelöst, dass ein gattungsgemäßes Gasventil, welches ein Verschlussteil zum Verschließen des Gasdurchgangs sowie ein Stellantrieb umfasst, der das Verschlussteil betätigt und einen mittels einer elektrischen Heizung beheizbaren ersten Temperatur-Weg-Umformer enthält, so weitergebildet wird, dass der Stellantrieb einen zweiten Temperatur-Weg-Umformer umfasst, der oberhalb einer zweiten Übertemperatur, die höher als die erste Übertemperatur ist, so auf das Verschlussteil wirkt, dass der Gasdurchgang verschlossen wird. Als Sicherheitsmerkmal ist erfindungsgemäß vorgesehen, dass der zweite Temperatur-Weg-Umformer beim Überschreiten der zweiten Übertemperatur irreversibel eine Bewegung erzeugt, die zum Verschließen des Verschlussteils führt. Dadurch wird wirksam verhindert, dass die Gaszufuhr unerwünscht wieder geöffnet wird. Dies kann beispielsweise beim Einsatz von Löschwasser der Fall sein. Da das Gasventil nach einem Brandfall ohnehin ausgetauscht werden muss, stellt dies wirtschaftlich keinen Nachteil dar. Dadurch ist gewährleistet, dass im Falle eines Brands die Gaszufuhr sicher verschlossen ist.

Bevorzugt sind in einer Weiterbildung Gehäuseöffnungen vorgesehen, die im Brandfall die Wärme auf den zweiten Temperatur-Weg-Umformer einwirken lassen.

In einer Weiterbildung der Erfindung ist der zweite Temperatur-Weg-Umformer so ausgebildet, dass er gemeinsam mit dem ersten Temperatur-Weg-Umformer auf das Verschlussteil wirkt. Dies ermöglicht eine einfachere Bauweise des Gasventils, da keine Bauteile, die die Bewegungen der beiden Temperatur-Weg-Umformer koordinieren, erforderlich sind.

In einer Ausführungsvariante sind die beiden Temperatur-Weg-Umformer seriell angeordnet. Hiermit ist gemeint, dass einer der beiden Temperatur-Weg-Umformer zunächst mit dem anderen Temperatur-Weg-Umformer verbunden ist und dieser dann auf das Verschlussteil wirkt. Da die Funktion des zweiten Temperatur-Weg-Umformers eine höhere Priorität als die des ersten Temperatur-Weg-Umformers hat, sind die beiden Temperatur-Weg-Umformer so ausgelegt, dass der Stellweg des zweiten Temperatur-Weg-Umformers größer ist als der des ersten.

In einer anderen Ausführungsvariante sind die beiden Temperatur-Weg-Umformer parallel angeordnet, wirken also beide parallel auf das Verschlussteil. Da die Funktion des zweiten Temperatur-Weg-Umformers eine höhere Priorität als die des ersten Temperatur-Weg-Umformers hat, sind die beiden Temperatur-Weg-Umformer so ausgelegt, dass die Stellkraft des zweiten Temperatur-Weg-Umformers größer ist als der des ersten.

In einer Weiterbildung der Erfindung zwischen zumindest einem der Temperatur-Weg-Umformer und dem Verschlussteil und/oder zwischen den beiden Temperatur-Weg-Umformern eine Feder vorgesehen. Diese Feder unterstützte die Koordination der Ausdehnungen der beiden Temperatur-Weg-Umformer.

In einer bevorzugten Ausführungsform ist zumindest einer der Temperatur-Weg-Umformer auf der Basis einer Formgedächtnislegierung aufgebaut. Bauteile aus einer Formgedächtnislegierung können bei Überschreiten einer Temperaturschwelle sprungartig ihre Form ändern. Dieses Verhalten kann ausgenutzt werden, um Bewegungen zu erzeugen, die ausschließlich bei der Temperaturschwelle erfolgen.

In einer weiteren bevorzugten Ausführungsform ist zumindest einer der Temperatur-Weg-Umformer auf der Basis eines mit einem Ausdehnungsfluid gefüllten Hohlkörpers besteht. Beispielsweise kann das Ausdehnungsfluid bei Überschreiten einer Temperaturschwelle durch einen Phasenwechsel sein Volumen schlagartig vergrößern. Auch dieses Verhalten kann ausgenutzt werden, um Bewegungen zu erzeugen, die ausschließlich bei der Temperaturschwelle erfolgen.

Bevorzugt erfolgt die irreversible Bewegung durch eine Zerstörung des zweiten Temperatur-Weg-Umformers oder durch eine bleibende Verformung des zweiten Temperatur-Weg-Umformers durch eine Erweichung des Materials.

In einer besonders bevorzugten Ausführungsvariante ist der erste Temperatur-Weg-Umformer und der zweite Temperatur-Weg-Umformer einstückig ausgeführt. Dadurch ist eine besonders einfache Herstellung und ein besonders zuverlässiger Betrieb des Gasventils möglich. Dabei kann der Temperatur-Weg-Umformer zum Beispiel durch ein aus zwei Formgedächtnislegierungen oder ähnlich wirkenden Materialien zusammengesetztes Bauteil ausgeführt sein. Es ist erfindungsgemäß auch möglich, eine Formgedächtnislegierung mit Zweiweg-Effekt bei zwei Temperaturen zu verwenden.

Die Erfindung wird nun anhand der Figuren detailliert erläutert.

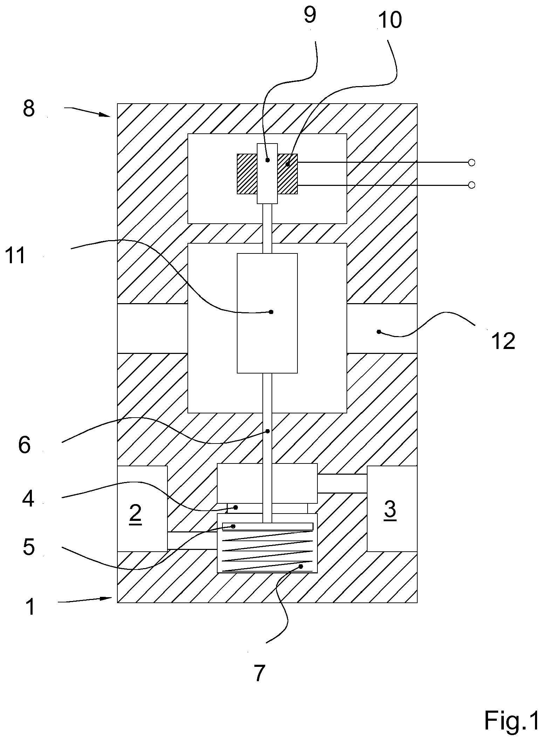

Figur 1 stellt ein erfindungsgemäßes Gasventil dar. Das Gasventil setzt sich aus einem Verschlussteil 1 im unteren Bereich und einem Stellantrieb 8 im oberen Bereich zusammen. Im Verschlussteil 1 wird das Gas vom Gaseinlass 2 zum Gasauslass 3 geleitet. Die Verbindung zwischen dem Gaseinlass 2 und dem Gasauslass 3 ist mittels eines Ventiltellers 5, der mit einem Ventilsitz 4 zusammenwirkt, verschließbar. Eine Ventilfeder 7 drückt im Ruhezustand den Ventilteller 5 gegen den Ventilsitz 4. Mittels eines Ventilschafts 6 ist der Ventilteller 5 mit dem Stellantrieb 8 in der Weise verbunden, dass mittels des Stellantriebs 8 der Ventilteller 5 vom Ventilsitz 4 getrennt werden kann, so dass die Verbindung zwischen Gaseinlass 2 und Gasauslass 3 hergestellt ist.

Der Stellantrieb 8 im oberen Bereich des Gasventils beinhaltet einen ersten Temperatur-Weg-Umformer 9, der durch eine Heizung 10 beheizbar ist. Der erste Temperatur-Weg-Umformer 9 basiert beispielsweise auf einer Formgedächtnislegierung, einem Formgedächtnispolymer, einem Bimetall, einem fluidgefüllten Hohlkörper oder einem Material mit hohem Temperaturausdehnungskoeffizienten. Der erste Temperatur-Weg-Umformer 9 ist so ausgebildet, dass bei Umgebungstemperatur das Verschlussteil 1 nicht geöffnet wird. Unter Umgebungstemperatur wird eine normale Betriebstemperatur verstanden. Diese kann beispielsweise im Bereich zwischen -20 °C und 50 °C liegen. Eine Beheizung de s ersten Temperatur-Weg-Umformers 9 durch die Heizung 10 auf eine erste Übertemperatur oberhalb der Umgebungstemperatur bewirkt eine Ausdehnung des Temperatur-Weg-Umformers 9, so dass der Ventilteller 5 vom Ventilsitz 4 abgehoben wird. Dadurch öffnet das Gasventil.

Damit das Gasventil im Fall eines Brands nicht ungewollt öffnet, ist zwischen dem ersten Temperatur-Weg-Umformer 9 und dem Ventilschaft 6 ein zweiter Temperatur-Weg-Umformer 11 vorgesehen, der so ausgebildet ist, dass er seine Länge beim Überschreiten einer zweiten Übertemperatur verkürzt. Gehäuseöffnungen 12 stellen sicher, dass die erhöhte Außentemperatur vom zweiten Temperatur-Weg-Umformer 11 erfasst wird. Durch das überschreiten der zweiten Übertemperatur wird das Gasventil verschlossen und eine Gasexplosion verhindert. In Figur 1 sind der erste Temperatur-Weg-Umformer 9 und der zweite Temperatur-Weg-Umformer 11 seriell angeordnet. Erfindungsgemäß müssen die beiden Temperatur-Weg-Umformer nicht direkt hintereinander angeordnet sein. Sie können beispielsweise auch über einen Hebelmechanismus miteinander verbunden sein. Dadurch ist es beispielsweise möglich, den zweiten Temperatur-Weg-Umformer 11 so auszuführen, dass sich bei überschreiten der zweiten Übertemperatur der zweite Temperatur-Weg-Umformer 11 ausdehnt.

Die für den zweiten Temperatur-Weg-Umformer 11 verwendeten Materialien sind im Prinzip die gleichen, die im Zusammenhang mit dem ersten Temperatur-Weg-Umformer 9 genannt wurden. Darüber hinaus kann der zweite Temperatur-Weg-Umformer 11 so ausgebildet werden, dass er irreversibel wirkt. Dadurch wird ein ungewolltes erneutes Öffnen des Gasventils nach einem Brand oder bei Einsatz von Löschwasser verhindert. Neben den genannten Materialien kommen für den irreversiblen Betrieb auch Materialien in Frage, die bei Überschreiten der zweiten Übertemperatur zerstört werden oder ihre Form verlieren. Dies könnte beispielsweise ein Kunststoff oder ein Metall mit niedrigem Schmelzpunkt sein.

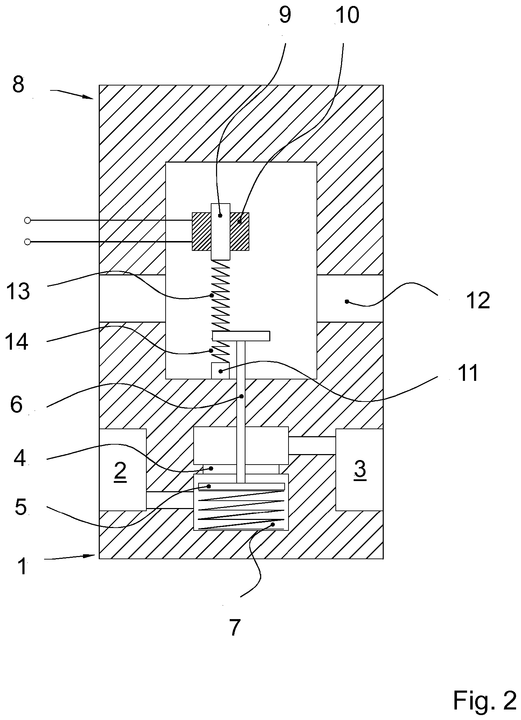

Figur 2 stellt eine Ausführungsvariante des Gasventil aus Figur 1 dar. Aus Gründen der Vereinfachung werden nur die Unterschiede beschrieben. In dieser Ausführungsvariante wirken der erste Temperatur-Weg-Umformer 9 und der zweite Temperatur-Weg-Umformer 11 parallel. Um die Bewegungen zu koordinieren, sind den zu erwarteten Längungen der beiden Temperatur-Weg-Umformer entsprechend ausgelegte Federn 13 und 14 vorgesehen. Die Federsteifigkeit dieser Federn und die der Ventilfeder 7 sind so aufeinander abgestimmt, dass die geforderte Funktionalität des Gasventils erreicht wird. Ebenfalls ist es erfindungsgemäß möglich, den zweiten Temperatur-Weg-Umformer 11 auf der anderen Seite des Ventiltellers anzuordnen.

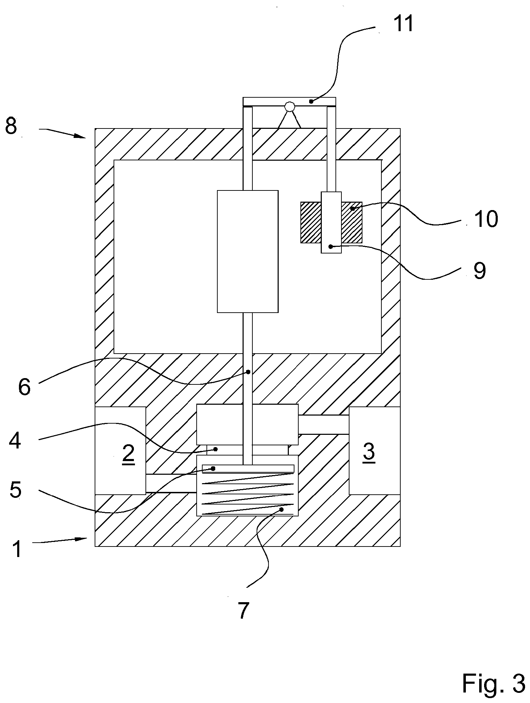

Eine weitere Ausführungsvariante stellt Figur 3 dar. Hier wirkt die Ausdehnung des ersten Temperatur-Weg-Umformers 9 auf den hier als Hebel ausgeführten zweiten Temperatur-Weg-Umformer. Dadurch wird die Betätigungswirkung des ersten Temperatur-Weg-Umformers 9 auf den Ventilschaft 6 übertragen. Der zweite Temperatur-Weg-Umformer 11 ist dabei aus einem Material, das bei Überschreiten der zweiten Übertemperatur zerstört wird oder seine Form verliert. Dadurch wird der Ventilteller 5 nicht mehr durch den ersten Temperatur-Weg-Umformer 9 geöffnet und die Ventilfeder 7 drückt den Ventilteller 5 gegen den Ventilsitz 4, so dass das Gasventil geschlossen wird.

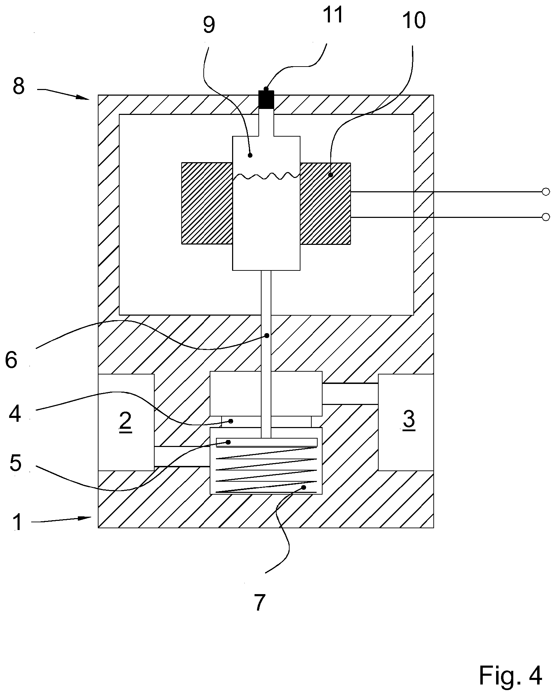

Figur 4 stellt eine weitere Ausführungsvariante dar. Der erste Temperatur-Weg-Umformer 9 ist als fluidgefüllter Hohlkörper ausgeführt. Beispielsweise führt eine Beheizung des ersten Temperatur-Weg-Umformers 9 zum Sieden der Flüssigkeit zum Ausdehnen des Temperatur-Weg-Umformers 9. Der zweite Temperatur-Weg-Umformer 11 ist hier als Verschlussmittel des Hohlkörpers ausgeführt. Ein Überschreiten der zweiten Übertemperatur bewirkt eine Zerstörung des Verschlussmittels 11, so dass der Hohlkörper geöffnet wird, das Fluid entweicht und das Ventil geschlossen wird.

### Bezugszeichenliste

- 1: Verschlussteil
- 2: Gaseinlass
- 3: Gasauslass
- 4: Ventilsitz
- 5: Ventilteller
- 6: Ventilschaft
- 7: Ventilfeder
- 8: Stellantrieb
- 9: Erster Temperatur-Weg-Umformer
- 10: Heizung
- 11: Zweiter Temperatur-Weg-Umformer
- 12: Gehäuseöffnung
- 13: Erste Feder
- 14: Zweite Feder

## Patentansprüche

1. Gasventil mit einem Verschlussteil (1) und einem Stellantrieb (8) zum Antreiben des Verschlussteils (1), wobei der Stellantrieb (8) einen mittels einer elektrischen Heizung (10) beheizbaren ersten Temperatur-Weg-Umformer (9) umfasst, und wobei das Verschlussteil (1) und der Stellantrieb (8) so zusammenwirken, dass bei Normal-Umgebungstemperatur des Temperatur-Weg-Umformers (9) das Verschlussteil (1) geschlossen ist und bei einer ersten Übertemperatur des Temperatur-Weg-Umformers (9) oberhalb der Normal-Umgebungstemperatur das Verschlussteil (1) geöffnet ist, wobei der Stellantrieb (8) einen zweiten Temperatur-Weg-Umformer (11) umfasst, der so ausgebildet ist, dass bei einer zweiten Übertemperatur oberhalb der ersten Übertemperatur des Stellantriebs (8) das Verschlussteil (1) geschlossen ist, **dadurch gekennzeichnet, dass** der zweite Temperatur-Weg-Umformer (11) seinen Temperatur-Weg-Zusammenhang bei Überschreiten der zweiten Übertemperatur irreversibel ändert.

2. Gasventil nach Anspruch 1, **dadurch gekennzeichnet, dass** das Gasventil Gehäuseöffnungen (12) aufweist, die sicherstellen, dass eine erhöhte Außentemperatur vom zweiten Temperatur-Weg-Umformer (11) erfasst wird.

3. Gasventil nach Anspruch 1 oder 2, **dadurch gekennzeichnet, dass** der zweite Temperatur-Weg-Umformer (11) so ausgebildet ist, dass er gemeinsam mit dem ersten Temperatur-Weg-Umformer (9) auf das Verschlussteil (1) wirkt.

4. Gasventil nach Anspruch 3, **dadurch gekennzeichnet, dass** der erste Temperatur-Weg-Umformer (9) und der zweite Temperatur-Weg-Umformer (11) seriell angeordnet sind.

5. Gasventil nach Anspruch 3, **dadurch gekennzeichnet, dass** der erste Temperatur-Weg-Umformer (9) und der zweite Temperatur-Weg-Umformer (11) parallel angeordnet sind.

6. Gasventil nach Anspruch 4 oder 5, **dadurch gekennzeichnet, dass** zwischen zumindest einem der Temperatur-Weg-Umformer (9, 11) und dem Verschlussteil (1) und/oder zwischen den beiden Temperatur-Weg-Umformern (9, 11) eine Feder vorgesehen ist.

7. Gasventil nach einem der Ansprüche 1 bis 6, **dadurch gekennzeichnet, dass** zumindest einer der Temperatur-Weg-Umformer (9, 11) aus einer Formgedächtnislegierung besteht.

8. Gasventil nach einem der Ansprüche 1 bis 7, **dadurch gekennzeichnet, dass** zumindest einer der Temperatur-Weg-Umformer (9, 11) aus einem mit einem Ausdehnungsfluid gefüllten Hohlkörper besteht.

9. Gasventil nach einem der Ansprüche 1 bis 8, **dadurch gekennzeichnet, dass** der zweite Temperatur-Weg-Umformer (11) bei Überschreiten der zweiten Übertemperatur zerstört wird oder erweicht.

10. Gasventil nach einem der vorhergehenden Ansprüche, **dadurch gekennzeichnet, dass** der erste Temperatur-Weg-Umformer (9) und der zweite Temperatur-Weg-Umformer (11) einstückig ausgebildet sind.

## Claims

1. Gas valve having a closure part (1) and an actuator (8) for actuating the closure part (1), wherein the actuator (8) comprises a first temperature displacement converter (9) which can be heated by means of an electric heater (10), and wherein the closure part (1) and the actuator (8) interact such that in the case of a normal ambient temperature of the temperature displacement converter (9) the closure part (1) is closed and in the case of a first overtemperature of the temperature displacement converter (9) above the normal ambient temperature the closure part (1) is opened, wherein the actuator (8) comprises a second temperature displacement converter (11), which is configured such that in the case of a second overtemperature above the first overtemperature of the actuator (8) the closure part (1) is closed, **characterised in that** the second temperature displacement converter (11) alters its temperature displacement correlation irreversibly when the second overtemperature is exceeded.

2. Gas valve according to claim 1, **characterised in that** the gas valve has housing openings (12) which ensure that an increased external temperature is detected by the second temperature displacement converter (11).

3. Gas valve according to claim 1 or 2, **characterised in that** the second temperature displacement converter (11) is configured such that it acts on the closure part (1) in cooperation with the first temperature displacement converter (9).

4. Gas valve according to claim 3, **characterised in that** the first temperature displacement converter (9) and the second temperature displacement converter (11) are arranged in series.

5. Gas valve according to claim 3, **characterised in that** the first temperature displacement converter (9) and the second temperature displacement converter (11) are arranged in parallel.

6. Gas valve according to claim 4 or 5, **characterised in that** between at least one of the temperature displacement converters (9, 11) and the closure part (1) and/or between the two temperature displacement converters (9, 11) is provided a spring.

7. Gas valve according to any of claims 1 to 6, **characterised in that** at least one of the temperature displacement converters (9, 11) consists of a shape memory alloy.

8. Gas valve according to any of claims 1 to 7, **characterised in that** at least one of the temperature displacement converters (9, 11) consists of a hollow body filled with an expansion fluid.

9. Gas valve according to any of claims 1 to 8, **characterised in that** the second temperature displacement converter (11) is destroyed or melted when the second overtemperature is exceeded.

10. Gas valve according to any of the preceding claims, **characterised in that** the first temperature displacement converter (9) and the second temperature displacement converter (11) are designed integrally.

## Revendications

1. Vanne de gaz avec une partie de fermeture (1) et un entraînement de réglage (8) pour l'entraînement de la partie de fermeture (1), dans laquelle l'entraînement de réglage (8) comporte un premier convertisseur voie-température (9) pouvant être chauffé au moyen d'un chauffage électrique (10), et dans laquelle la partie de fermeture (1) et l'entraînement de réglage (8) coagissent de sorte qu'en cas de température ambiante normale du convertisseur voie-température (9) la partie de fermeture (1) soit fermée et en cas d'une première température supérieure du convertisseur voie-température (9) au-dessus de la température ambiante normale la partie de fermeture (1) soit ouverte, dans laquelle l'entraînement de réglage (8) comporte un second convertisseur voie-température (11) qui est réalisé de sorte qu'en cas d'une seconde température supérieure au-dessus de la première température supérieure de l'entraînement de réglage (8) la partie de fermeture (1) soit fermée, **caractérisée en ce que** le second convertisseur voie-température (11) modifie de manière irréversible son rapport voie-température en cas de dépassement de la seconde température supérieure.

2. Vanne de gaz selon la revendication 1, **caractérisée en ce que** la vanne de gaz présente des ouvertures de boîtier (12) qui assurent qu'une température extérieure accrue est détectée par le second convertisseur voie-température (11).

3. Vanne de gaz selon la revendication 1 ou 2, **caractérisée en ce que** le second convertisseur voie-température (11) est réalisé de sorte qu'il agisse conjointement avec le premier convertisseur voie-température (9) sur la partie de fermeture (1).

4. Vanne de gaz selon la revendication 3, **caractérisée en ce que** le premier convertisseur voie-température (9) et le second convertisseur voie-température (11) sont agencés en série.

5. Vanne de gaz selon la revendication 3, **caractérisée en ce que** le premier convertisseur voie-température (9) et le second convertisseur voie-température (11) sont agencés en parallèle.

6. Vanne de gaz selon la revendication 4 ou 5, **caractérisée en ce qu'un** ressort est prévu entre au moins un des convertisseurs voie-température (9, 11) et la partie de fermeture (1) et/ou entre les deux convertisseurs voie-température (9, 11).

7. Vanne de gaz selon l'une quelconque des revendications 1 à 6, **caractérisée en ce qu'au** moins un des convertisseurs voie-température (9, 11) se compose d'un alliage à mémoire de forme.

8. Vanne de gaz selon l'une quelconque des revendications 1 à 7, **caractérisée en ce qu'au** moins un des convertisseurs voie-température (9, 11) se compose d'un corps creux rempli d'un fluide d'expansion.

9. Vanne de gaz selon l'une quelconque des revendications 1 à 8, **caractérisée en ce que** le second convertisseur voie-température (11) est détruit ou ramollit en cas de dépassement de la seconde température supérieure.

10. Vanne de gaz selon l'une quelconque des revendications précédentes, **caractérisée en ce que** le premier convertisseur voie-température (9) et le second convertisseur voie-température (11) sont réalisés d'un seul tenant.
